Europäisches Patentamt

European Patent Office

Office européen des brevets

(11) Numéro de publication: **0 026 723
B1**

(12) **FASCICULE DE BREVET EUROPEEN**

(45) Date de publication du fascicule du brevet:
14.08.85

(21) Numéro de dépôt: **80430016.8**

(22) Date de dépôt: **12.09.80**

(51) Int. Cl.⁴: **G 01 C 5/04**

(54) Niveau à contrôle électrique.

(30) Priorité: **14.09.79 FR 7923276**

(43) Date de publication de la demande:
**08.04.81 Bulletin 81/14**

(45) Mention de la délivrance du brevet:
**14.08.85 Bulletin 85/33**

(84) Etats contractants désignés:
**AT BE CH DE GB IT LI NL SE**

(56) Documents cités:
**BE - A - 550 572
DE - A - 2 711 620
DE - A - 2 739 975
DE - B - 2 607 513
FR - A - 2 280 881
US - A - 3 779 084**

**Livre de H. THIERBACH "HYDROSTATISCHE
MESSYSTEME", H. WICHMANN, VERLAG,
KARLSRUHE (1979)**

(73) Titulaire: **Legris, Marcel, Place de la Parette - Air Bel -
Bt 48, F-13011 Marseille (FR)**

(72) Inventeur: **Legris, Marcel, Place de la Parette - Air Bel -
Bt 48, F-13011 Marseille (FR)**

(74) Mandataire: **Azals, Henri et al, c/o CABINET BEAU DE
LOMENIE 14, rue Raphael, F-13008 Marseille (FR)**

ACTORUM AG

# Description

La présente invention concerne un instrument du type «niveau» pour maçon tel que défini dans le préambule de la revendication 1.

Dans certains dispositifs connus de ce genre, c'est le niveau d'un liquide contenu dans deux réservoires reliés par un tuyau qui indique l'horizontalité. A ces instruments, il est quelque fois adapté un contrôleur électrique de niveau optimal ayant deux électrodes trempant dans le liquide. De tels dispositifs sont, dans la pratique, d'un emploi mal aisé et sont en général peu précis du fait notamment qu'ils ne sont pas équipés d'un système de tarage.

L'instrument selon l'invention est caractérisé dans la revendication 1. Il offre un perfectionnement aux instruments du type niveau fonctionnant selon le principe des vases communicants et comporte un tuyau reliant deux réservoirs remplis de mercure. Le tout est rendu étanche par deux membranes. Des instruments fonctionnant selon le principe des vases communicants sont décrits notamment dans le livre de H. THIERBACH intitulé «HYDROSTATISCHE MESSSYSTEME» et publié par H. WICHMANN VERLAG 1979. Un instrument fonctionnant selon ce principe et équipé de membranes est décrit par ailleurs dans le document FR-A-2 280 881. Toutefois, parmi les documents décrits dans l'art antérieur, aucun ne présente un système de tarage tel que celui équipant l'instrument conforme à la présente invention. Ce dernier possède des moyens de contrôle électriques du niveau horizontal.

Selon un premier mode de réalisation de l'instrument selon l'invention, les membranes comprinment plus ou moins un matériau, tel que du carbone, et dont la résistivité varie en fonction de la pression. Ces résistances forment deux branches d'un pont de WHEATSTONE avec galvanométre à point central. Lorsque l'horizontalité est bonne, l'aiguille indique le zéro central. Dans le cas contraire le pont de WHEATSTONE est déséquilibré et l'aiguille indique l'écart par rapport au niveau horizontal. Une règle graduée associée à l'ensemble permet le traçage. Ce procédé n'est pas limitatif car tous les transducteurs à grande sensibilité peuvent être combinés avec les membranes. Les courants indicateurs d'écart peuvent fournir des tensions et être utilisés pour le fonctionnement de servomécanismes.

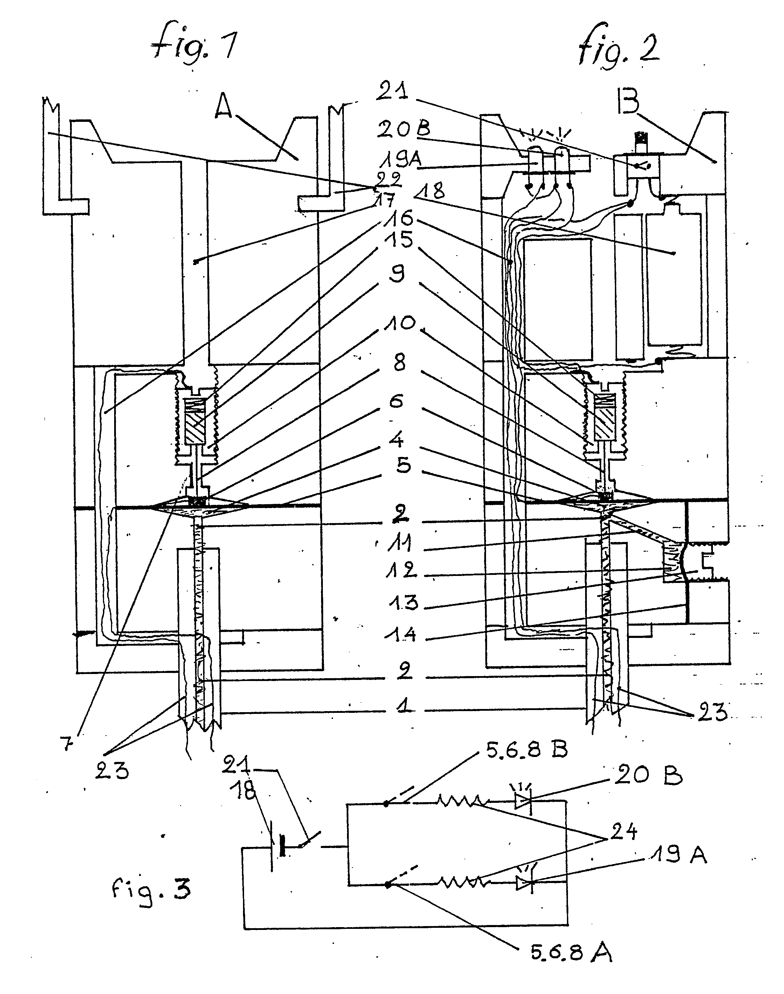

Selon un deuxième mode de réalisation de l'instrument selon l'invention, les membranes actionnent un interrupteur qui ouvre ou ferme un circuit électrique, comportant une source de courant électrique, sur une lampe. Les figures annexées illustrent à titre indicatif le deuxième mode de réalisation de l'instrument conforme à la présente invention. Tel qu'il est représenté sur les figures 1 et 2, cet instrument comporte un tuyau souple 1 et résistant aux pressions, les canaux 2 de faible diamètre limitant le volume du mercure employé ainsi que les variations apparentes de ce volume dues aux déformations de ce tuyau. Aux extrémités de ce tuyau on rencontre deux prismes gravés, A, figure 1 et B, figure 2. Ces prismes sont constitués de plusieurs éléments en matière plastique façonnés de manière à recevoir et former les différents organes. Les canaux 2 relient le tuyau 1 aux deux réservoirs 4 dont la forme limite et épouse les faibles mouvements des membranes 5 souples et résistantes, rendant le tout étanche. Une vis de tarage 13 écrase plus ou moins une autre membrane 14 et règle à volonté, à l'aide du liquide contenu dans un troisième réservoir 12 et dans le canal 11, le volume de mercure contenu dans le circuit. Des pastilles de métal 6 collées sur les membranes 5 et des pointes de contact 8 très effilées et solidaires de pistons 9 forment les deux interrupteurs. Les pointes de contact B, ne devant pas résister aux pression, se rétractent à l'aide des pistons 9 coulissant dans les cylindres. Les ressorts 15 maintiennent en position initiale les pistons 9 porte pointes. Les cylindres 10 sont filetés et fermés à leurs parties supérieures, des entailles sont prévues pour le réglage. Les deux interrupteurs 5-6-8 B et 5-6-8 A, ainsi formés, sont reliés électriquement comme le montre la figure 3. Un troisième interrupteur 21, les résistances chutrices 24, les deux voyants 19A et 20B, la pile 18 ainsi que les différents câblages que l'on retrouve dans les conduits 16 pratiqués dnas les prismes A et B permettent les liaisons. Une anse 22 permet de maintenir le prisme A à un point donné. Les conducteurs 23 noyés dans la matière du tuyau 1 relient les deux prismes.

Le fonctionnement est le suivant: lorsque les membranes 5 sont à l'horizontal et planes et après étalonnage de l'instrument par la vis de tarage 13, les pastilles 6 et les pointes de contact 8 de chaque prisme A et B s'effleurent à peine ce qui entraîne, conformément au circuit de la figure 3, l'alimentation des voyants 19A et 20B. Si le prisme B se trouve à un niveau supérieur à celui du prisme A et selon le principe des vases communicants, le mercure actionne les membranes, la membrane du prisme B ouvre le circuit et le voyant 20B s'éteint. Dans le même temps la membrane du prisme A maintient le circuit fermé, la lampe 19A reste alimentée et indique que le prisme B es au dessus de l'horizontale. Si l'on descend trop le prisme B, la membrane du prisme A ouvre le circuit et le voyant 19A s'éteint. Au même instant la membrane du prisme B ferme le circuit du voyant 20B qui s'allume et indique que le prisme B est en dessous de l'horizontale. En remontant lentement le prisme B les deux voyants s'allument à un moment qui correspond à l'horizontalité.

L'instrument objet de l'invention, peut être utilisé dans tous les cas où l'on recherche une horizontalité. Cet instrument peut être particulièrement utile dans le bâtiment. En utilisant les courants indicateurs d'écart d'horizontalité pour l'actionnement de relais où de servomécanismes, l'instrument selon l'invention peut maintenir l'horizontalité de certaines machines.

## Revendications

1. Instrument, du type niveau de maçon, comportant:

– un circuit étanche rempli de mercure, constitué par un tuyau (1) souple de faible diamètre intérieur reliant deux réservoirs (4) de faible contenance, deux membranes (5) souples, le volume de chaque réservoir (4) étant limité par une membrane (5) respective desdites membranes souples (5),

– des moyens de contrôle électriques du niveau horizontal actionnés par lesdites membranes (5) souples,

ledit instrument étant caractérisé en ce qu'il comporte, en outre, un système de tarage constitué par un troisième réservoir (12) communiquant avec ledit circuit (1, 4) étanche et dont le volume est ajustable par une troisième membrane (14) déformable sous l'action de moyens (13) de réglage solidaires de cette troisième membrane (14).

2. Instrument selon la revendication 1, caractérisé en ce que lesdits moyens (13) de réglage sont constitués par une vis.

3. Instrument selon les revendications 1 ou 2, caractérisé en ce que les dits moyens de contrôle électriques comportent deux résistances constituées d'un matériau dont la résistivité varie en fonction de la pression exercée par lesdites membrane (5) souples sur ledit matériau, lesdites résistances formant deux branches d'un pont de Wheatstone incluant un galvanomètre à zéro central dont l'aiguille indique l'écart de la position par rapport au niveau horizontal.

4. Instrument selon les revendications 1 ou 2, caractérisé en ce que lesdits moyens de contrôle électriques comportent deux interrupteurs électriques constitués chacun par une pastille métallique collées sur chacune desdites membranes (5) souples, et pouvant venir au contact d'une pointe (8) de contact métallique solidaire d'un piston (9) pouvant coulisser verticalement dans une pièce cylindrique (10) dont la position verticale est réglable par vissage, chacun desdits interrupteurs étant monté en série dans un circuit électrique incluant une source (18) de courant électrique ainsi qu'un voyant (19 ou 20) de contrôle lumineux.

5. Instrument selon la revendication 4, caractérisé en ce qu'un ressort (15) est solidaire dudit piston (9) et agit en sens inverse de la force transmise audit piston (9) lors d'une augmentation de la pression dans le réservoir (4) associé à ladite membrane (5) souple.

## Claims

1. Instrument of the mason's level type, comprising:

– a water-tight circuit filled with mercury, constituted by a supple hose (1) of small inner diameter connecting two tanks (4) of small capacity, two supple diaphragms (5), the volume of each tank (4) being limited by one respective diaphragm (5) from said supple diaphragms,

– means for electrically controlling the horizontal level, actuated by said supple diaphragms (5), said instrument being characterized in that it further comprises an adjustment system constituted by a third tank (12) communicating with said water-tight circuit (1, 4) and whose volume can be adjusted by a third diaphragm (14) deformable under the action of adjustment means (13) integral with said third diaphragm (14).

2. Instrument according to claim 1, characterized in that said adjustment means (13) are constituted by a screw.

3. Instrument according to claims 1 or 2, characterized in that said electric control means comprise two heating elements constituted by a material whose resistivity varies as a function of the pressure exerted by said supple diaphragm (5) on said material, said heating elements constituting two Meter bridge arms including a center zero galvanometer whose needle indicates the deviation of the position with respect to the horizontal level.

4. Instrument according to claims 1 or 2, characterized in that said electric control means comprise two electric switches each constituted by a metallic patch stuck on each of said supple diaphragms (5), and adapted to come in contact with a metallic contact point (8), integral with a piston (9) adapted to slide vertically in a cylindrical piece (10) whose vertical position can be adjusted by screwing, each of said switches being seriesmounted in an electric circuit including a source (18) of electric current, and a control lamp (19 or 20).

5. Instrument according to claim 4, characterized in that a spring (15) is integral with said piston (9) and acts in the direction opposite to the force transmitted to said piston (9) when the pressure in the tank (4) associated to said supple diaphragm (5) is increased.

## Patentansprüche

1. Instrument nach Art einer Wasserwaage mit einem mit Quecksilber gefüllten dichten Kreis, bestehend aus einem Schlauch (1) von geringem Innendurchmesser, der zwei Behälter (4) von geringem Rauminhalt verbindet, und zwei nachgiebigen Membranen (5), wobei das Volumen jedes Behälters (4) durch jeweils eine der nachgiebigen Membranen (5) begrenzt ist, und mit Mitteln zur elektrischen Kontrolle des horizontalen Niveaus, die von den nachgiebigen Membranen (5) betätigt werden, dadurch gekennzeichnet, dass es weiters ein Tariersystem umfasst, das durch einen dritten Behälter (12) gebildet ist, der mit dem dichten Kreis (1, 4) kommuniziert und dessen Volumen mittels einer dritten Membran (14), die unter der Wirkung von mit dieser dritten Membran (14) verbundenen Reguliermitteln (13) verformbar ist, einstellbar ist.

2. Instrument nach Anspruch 1, dadurch gekennzeichnet, dass die Reguliermittel (13) durch eine Schraube gebildet sind.

3. Instrument nach den Ansprüchen 1 oder 2, dadurch gekennzeichnet, dass die elektrischen Kontrollmittel zwei Widerstände umfassen, die aus einem Material hergestellt sind, dessen Leitungswiderstand als Funktion des von den nachgiebigen Membranen (5) auf das Material ausgeübten Drucks variiert, wobei die beiden Widerstände zwei Schenkel einer Wheatstone-Brücke bilden, die ein zentrales Nullgalvanometer enthält, dessen Nadel die Abweichung der Position vom horizontalen Niveau anzeigt.

4. Instrument nach den Ansprüchen 1 oder 2, dadurch gekennzeichnet, dass die elektrischen Kontrollmittel zwei elektrische Unterbrecher umfassen, die jeweils durch ein auf jeder der nachgiebigen Membranen (5) aufgeklebtes Metallplättchen gebildet sind und mit einem zu einem Kolben (9) gehörigen metallischen Kontaktstift (8) in Kontakt bringbar sind, welcher Kolben in einem zylindrischen Stück (10), dessen Vertikalposition durch Schrauben regulierbar ist, vertikal verschiebbar ist, wobei jeder der Unterbrecher in einem eine elektrische Stromquelle (18) sowie eine Kontroll-Leuchtanzeige (19 oder 20) enthaltenden Stromkreis in Serie geschaltet ist.

5. Instrument nach Anspruch 4, dadurch gekennzeichnet, dass mit dem Kolben (9) eine Feder (15) verbunden ist und bei einer Erhöhung des Drucks in dem mit der nachgiebigen Membran (5) verbundenen Behälter (4) in zu der auf den Kolben (9) übertragenen Kraft entgegengesetzter Richtung wirkt.

*fig. 1*

*fig. 2*

*fig. 3*